# EUROPÄISCHE PATENTSCHRIFT

(11) **EP 1 536 618 B1**
(45) Veröffentlichungstag und Bekanntmachung des Hinweises auf die Patenterteilung: **28.01.2015**
(21) Anmeldenummer: 04026246.1
(22) Anmeldetag: 05.11.2004
(51) Int. Cl.: H04M 1/725, H04M 1/247

(54) **Schalter zum Wechseln zwischen Video- und Sprachkommunikation bei Mobilfunkendgeräten**
Switch adapted to change between video and voice communication in mobile terminals
Interrupteur adapté à la commutation entre communication de signaux audio et vidéo dans des terminaux mobiles

(30) Priorität: 25.11.2003 DE 10355364
(43) Veröffentlichungstag der Anmeldung: 01.06.2005
(73) Patentinhaber: Vodafone Holding GmbH, 40213 Düsseldorf (DE)
(72) Erfinder: Fassmer, Jens, 40668 Meerbusch (DE); Jantsch, Peter, 41468 Neuss (DE); Carter, Phillip, Wallingford OX10 0HQ (GB)
(74) Vertreter: Ring & Weisbrodt

(56) Entgegenhaltungen:
- EP-A- 0 796 026
- US-A- 6 009 336
- US-A1- 2001 044 321
- US-B1- 6 466 202

## Beschreibung

### Technisches Gebiet

Die Erfindung betrifft ein Mobilfunkendgerät, insbesondere für den GSM- und UMTS-Standard, welches sowohl für Sprach- als auch zur Videokommunikation ausgebildet ist, und über einen Schaltmechanismus verfügt, welcher die Video- bzw. Bildkommunikation zur Sprachkommunikation zu- oder wegschaltet.

### Stand der Technik

Vor allem durch die Verwendung von Digitaltechnik und die Vergrößerung der Übertragungskapazitäten ist es nunmehr möglich, nicht nur akustische Signale, sondern auch Videosignale über Mobilfunknetze, welche insbesondere nach dem GSM- (= Globel Service for Mobile Communications) und UMTS-Standard (= Universal Mobile Telecommunications System) arbeiten, zu übertragen. Dadurch lässt sich, sofern Mobilfunkendgeräte dafür ausgelegt sind, eine Video-Kommunikation zwischen zwei Mobilfunkteilnehmern herstellen. Dabei gilt, je mehr Daten innerhalb eines Zeitintervalls übertragen werden können, desto besser ist die Bildqualität, weil die Auflösung in direkter Korrelation zu der Menge der übertragenen Daten steht.

Die Kosten für die Übertragung richten sich üblicherweise nach der Menge der übertragenen Daten. Bei einem "Videotelefonat" kann hierbei einiges an Gebühren anlaufen.

Bei den bestehenden videofähigen Mobilfunkendgeräten kann entweder eine Verbindung als Videotelefonat oder eine Verbindung als reines Telefongespräch aufgebaut werden. Der Teilnehmer, der einen Videoanruf wünscht, wählt hierzu die Nummer des Kommunikationspartners und aktiviert den Verbindungsaufbau durch Auswahl eines Menüpunkts oder einer entsprechend zugeordneten Taste. Um ein herkömmliches Gespräch zu erhalten, wird die gleiche Nummer angewählt, jedoch durch Auswahl des Menüpunkts oder einer entsprechend zugeordneten Taste. Die Verbindung muss jedoch immer unterbrochen werden, wenn zwischen den beiden Modi gewechselt werden soll. Ein Wechsel der Modi ist bei herkömmlichen Geräten ohne Verbindungsabbau nicht vorgesehen.

Es ist ferner bekannt, mit digitalen Kameras, die in Mobilfunkendgeräten integriert sind, Bilder zu erzeugen und diese als MMS (= Multimedia Message Service), ggf. mit einer Textnachricht, zu versenden. Nachteil dieser Kommunikationsart ist, dass die Teilnehmer keinen unmittelbaren Kontakt miteinander haben. Der Kontakt vollzieht sich immer zeitversetzt. Er kann daher eine direkte Verbindung zwischen den Teilnehmern, wie es ein Gespräch oder eine Videotelefonat darstellt, nicht ersetzen.

In der US-Patentschrift US 6.009.336 wird ein Mobilfunkendgerät mit zwei Gehäusen offenbart, welche über eine Verriegelung lösbar und drehbar an einander gekoppelt werden. Je nach Kopplungszustand und Auswahl von Steuerelementen durch den Benutzer wird das Mobilfunkendgerät in verschiedene Betriebsmodi geschaltet. Dabei kann beispielsweise bei einer bestehenden Verbindung zu einem anderen Teilnehmer eine Videokommunikation begonnen werden. Eine Kamera des Mobilfunkendgeräts wird eingeschaltet und entsprechende Bilder des Benutzers über das Mobilfunknetz an den anderen Teilnehmer gesendet. Im Videotelefonie-Modus werden zusätzlich zur Sprache Bilder über eine bestehende Verbindung übermittelt. Durch Anwahl eines weiteren Steuerelements des Mobilfunkendgeräts wird das Mobilfunkendgerät wieder in einen Sprachtelefonie-Modus zurückgesetzt.

In der EP 0 796 026 A2 wird ein Gehäuse für ein Mobilfunkendgerät beschrieben, das eine Kamera mit einer Abdeckung enthält. Durch Öffnen der Abdeckung wird eine bidirektionale Videoverbindung zwischen einem angerufenen Endgerät und dem Mobilfunkendgerät aktiviert. Dazu muss der Anruf verbunden und von der Gegenseite akzeptiert werde.

Die US 6,466,202 B1 offenbart ein weiteres Mobilfunkendgerät mit einem Schalter zum Betätigen eines Anrufs. Falls ein angerufenes Endgerät Videotelefonie unterstützt, wird automatisch eine Videokommunikation über eine Telefonverbindung eingerichtet. Mit einem weiteren Schalter wird die Videokommunikation beenden und die Verbindung getrennt.

### Offenbarung der Erfindung

Aufgabe der Erfindung ist es daher, ein zur Sprach- und Video- bzw. Bildkommunikation ausgebildetes Mobilfunkendgerät zu schaffen, welches die Nachteile des Standes der Technik vermeidet und welches ohne Verbindungsunterbrechung zwischen der Sprach- und Videokommunikation wechseln kann.

Erfindungsgemäß wird die Aufgabe gelöst durch ein Mobilfunkendgerät, insbesondere für den GSM- und UMTS-Standard, welches sowohl für Sprach- als auch zur Video- bzw. Bildkommunikation ausgebildet ist, und über einen Schaltmechanismus verfügt, welcher die Video- bzw. Bildkommunikation zur Sprachkommunikation zu- oder wegschaltet, wobei das Mobilfunkendgerät derart ausgebildet ist, dass mit Betätigung des Schaltmechanismus ein Sprachanruf gehalten wird und zu dem gehaltenen Sprachanruf ein Videoanruf aufgebaut wird.

Vorteilhafterweise schaltet der Schaltmechanismus die Sprach- und Videokommunikation parallel. Durch diese Maßnahme bleibt sowohl die Sprachkommunikation, als auch die Video- bzw. Bildkommunikation erhalten.

Eine bevorzugte Ausbildung der Erfindung ergibt sich dadurch, dass ein Schaltknopf, - hebel oder einen Menüeintrag eines Menüs zur Betätigung des Schaltmechanismus vorgesehen ist. Damit kann durch einfache manuelle Betätigung der Anwender zwischen den beiden Kommunikationsmodi nach Belieben wechseln. Alternativ oder auch gemeinsam zu dem manuellen Schaltmechanismus sind Mittel zur Sprachsteuerung vorgesehen, mit denen der Schaltmechanismus gesteuert wird.

Weitere Vorteile ergeben sich aus dem Gegenstand der Unteransprüche sowie den Zeichnungen mit der dazugehörigen Beschreibung.

### Kurze Beschreibung der Zeichnung

- Fig. 1: zeigt in einer Prinzipskizze ein paar erfindungsgemäßer Mobilfunkendgeräte, die über ein Mobilfunknetz kommunizieren.
- Fig. 2: zeigt eine Grafik bzgl. der Datenmenge/Zeit beim Zu- und Wegschalten der Video- bzw. Bildmode.
- Fig. 3: zeigt ein Diagramm zur Zuschaltung von Videokommunikation zur Sprachkommunikation.

### Bevorzugtes Ausführungsbeispiel

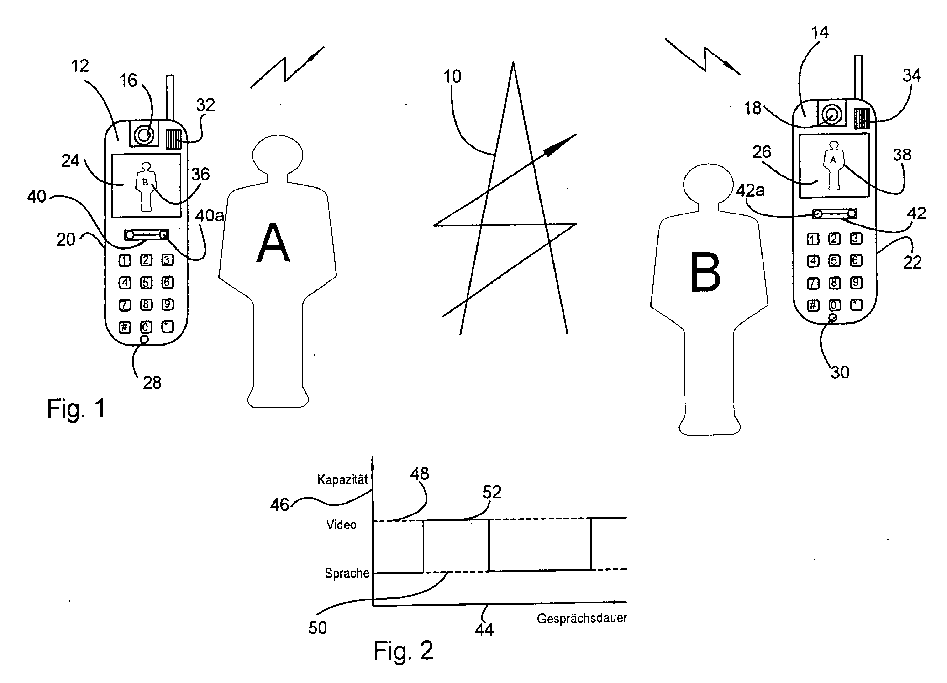

In Fig. 1 wird mit 10 ein Mobilfunknetz bezeichnet. Das Mobilfunknetz 10 wird symbolisch als Funkmast dargestellt. Über das Mobilfunknetz 10 kommunizieren zwei Mobilfunkteilnehmer A und B miteinander. Sie verfügen dazu über Mobilfunkendgeräte 12 und 14. Die Mobilfunkendgeräte 12, 14 sind für die Übertragung einer Videokommunikation ausgebildet. Sie weisen dazu jeweils eine Digitalkamera 16, 18 auf, welche die Videodaten erzeugen. Die Digitalkameras 16, 18 sind im vorliegenden Ausführungsbeispiel in das Gehäuse 20, 22 der Mobilfunkendgeräte 12, 14 integriert. Die Digitalkameras 16, 18 können aber grundsätzlich auch als separate Bestandteile ausgebildet sein, die mit den Mobilfunkendgeräten 12, 14 zur Datenübertragung über das Mobilfunknetz 10 verbunden sind.

Die Mobilfunkendgräte 12, 14 enthalten jeweils eine Anzeige 24, 26. Die Anzeigen 24, 26 unterstützen grafische Animation. Sie sind somit in der Lage, Videodaten zu verarbeiten. Auf den Anzeigen 24 bzw. 26 wird jeweils ein Abbild 36, 38 der Mobilfunkteilnehmer A bzw. B dargestellt. Ferner weisen die Mobilfunkendgeräte jeweils ein Mikrophon 28, 30 zur Sprachein- und jeweils einen Lautsprecher 32, 34 zur Sprachausgabe auf.

Die Mobilfunkendgeräte 12, 14 verfügen ferner über jeweils einen Schaltermechanismus 40 und 42 mit Schaltknöpfen 40a bzw. 42a. Unterhalb des Schaltermechanismus 40, 42 befindet sich jeweils ein Bedienerfeld mit dem die Mobilfunkendgeräte 12, 14 bedient werden. Die Mobilfunkendgeräte 12, 14 lassen sich zudem über eine Sprachsteuerung bedienen. Die über das Mikrophon 28 bzw. 30 eingegebenen Befehle werden von einem nicht dargestellten Prozessor als Befehle erkannt und entsprechend umgesetzt.

Mit den Schaltmechanismen 40, 42 sind im vorliegenden Ausführungsbeispiel nunmehr drei verschiedene Verbindungsvarianten möglich:
Die erste Variante besteht darin, dass mit Betätigung des Schaltknopfes 40a bzw. 42a je nach dem, entweder die Videoverbindung oder die Sprachverbindung automatisch zu bzw. weggeschaltet wird. Dabei wird z.B. die entsprechende Nummer für ein Videotelefonat angewählt. Die Nummer für den Videoanruf oder für den Sprachanruf erhält das Mobilfunkendgerät 12 bzw. 14 über eine Liste aus bereits getätigten Anrufen oder aus der gesendeten CLI (= Calling Line Identification), welche über die Verbindung mit der Gegenstelle gesendet wird. Für den Fall, dass für Video- und Sprachanrufe unterschiedliche Nummern verwendet werden, wird die Video- bzw. Sprachnummer aus einer Adressdatenbank der Mobilfunkendgeräte 12, 14 abgeleitet.

Die zweite Variante besteht darin, dass mit Betätigung der Schaltknöpfe 40a, 42a der Sprachanruf gehalten wird. Zu dem gehaltenen Sprachanruf wird dann ein Videoanruf aufgebaut. Der Sprachanruf wird wahlweise nach einem erfolgreichen Videoanruf entweder beendet oder während des gesamten Videorufs gehalten, um eine Todzeit während des Wechsels möglichst kurz zu halten. Auch hier wird die Nummer für den Videoanruf oder für den Sprachanruf das Mobilfunkendgerät 12 bzw. 14 über eine Liste aus bereits getätigten Anrufen bezogen oder aus der gesendeten CLI. Für den Fall, dass für Video- und Sprachanrufe unterschiedliche Nummern verwendet werden, wird die Video- bzw. Sprachnummer aus einer Adressdatenbank der Mobilfunkendgeräte 12, 14 abgeleitet.

In einer dritten Variante wird durch Betätigung der Schaltknöpfe 40a, 42a parallel zum Sprachanruf ein Videoanruf oder zum Videoanruf ein Sprachanruf aufgebaut. Die Sprachverbindung kann bestehen bleiben oder anschließend auch abgebaut werden. Die erforderlichen Nummern für die Verbindung werden entsprechend, wie bei den vorherigen Varianten, bezogen.

In Fig. 2 wird eine Grafik bzgl. der Datenmenge/Zeit beim zu- und wegschalten des Videomode dargestellt. Auf der Ordinate 46 ist die Kapazität bzw. Datenmenge und auf der Abszisse 44 die Zeit bzw. Gesprächsdauer abgebildet. Die Skalierung ist willkürlich gewählt und soll nur den Sachverhalt verdeutlichen. Bei der Videoübertragung sind erheblich mehr Daten zu übertragen als bei der Sprachübertragung. Bei ununterbrochener Videokommunikation läge das Niveau der übertragenen Daten bei der gestrichelten Linie 48. Entsprechend läge bei ununterbrochener Sprachkommunikation das Niveau der übertragenen Daten bei der gestrichelten Linie 50. Durchgezogener Graph 52 zeigt die Veränderung der übertragenen Datenmenge bei einem Wechsel zwischen Sprach- und Videoanruf.

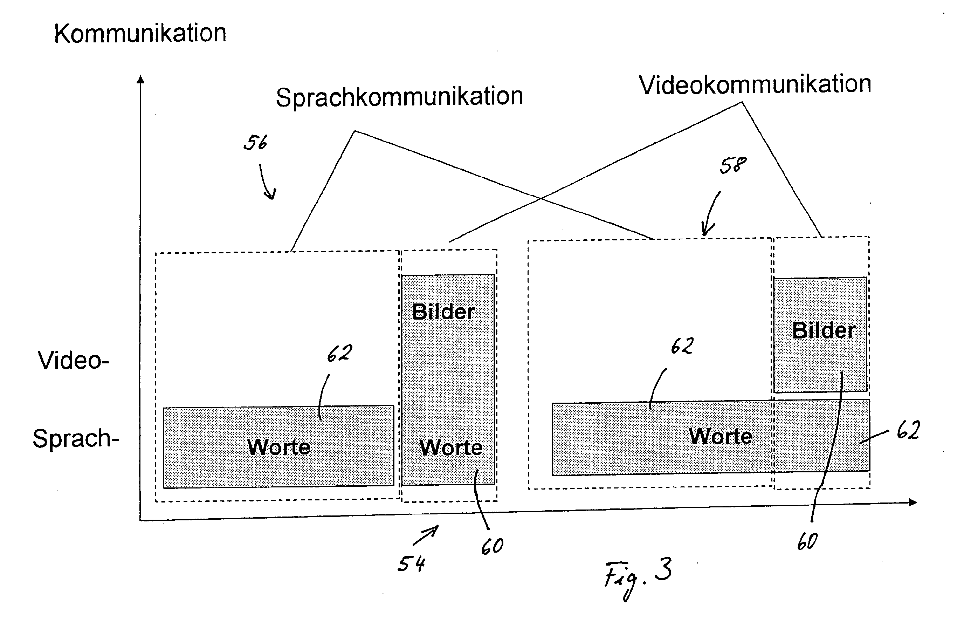

Fig. 3 zeigt ein Diagramm 54, mit dem zeitlichen Ablauf von zwei verschiedenen Schaltvorgängen 56, 58 beim Zuschalten einer Videokommunikation 60. Beim ersten Schaltvorgang 56 wird von einer reinen Sprachkommunikation 62 auf eine Videokommunikation 60 geschaltet. Dabei ist die Sprachkomponente 62 in dem Datenstrom der Videokommunikation 60 integriert, d.h. es wird nur ein Kanal mit entsprechender Bandbreite verwendet. Beim zweiten Schaltvorgang 58 wird zu der Sprachkommunikation 62 die Videokommunikation 60 ebenfalls hinzugeschaltet. Hierbei sind die Video- und Sprachdaten in zwei separaten Kanälen vorgesehen. Die Sprachdaten der Sprachkommunikation 62 befinden sich nicht in dem Datenstrom der Videokommunikation 60.

## Patentansprüche

1. Mobilfunkendgerät (12, 14), insbesondere für den GSM- und UMTS-Standard, welches sowohl für Sprach- als auch zur Video- bzw. Bildkommunikation ausgebildet ist, und über einen Schaltmechanismus (40, 42) verfügt, welcher die Video- bzw. Bildkommunikation zur Sprachkommunikation zu- oder wegschaltet, **dadurch gekennzeichnet, dass** das Mobilfunkendgerät (12, 14) derart ausgebildet ist, dass mit Betätigung des Schaltmechanismus (40, 42) ein Sprachanruf gehalten wird und zu dem gehaltenen Sprachanruf ein Videoanruf aufgebaut wird.

2. Mobilfunkendgerät (12, 14), welches für Sprach- als auch zur Videokommunikation ausgebildet ist, nach Anspruch 1, **dadurch gekennzeichnet, dass** der Schaltmechanismus (40, 42) die Sprach- und Videokommunikation parallel schaltet.

3. Mobilfunkendgerät (12, 14), welches für Sprach- als auch zur Videokommunikation ausgebildet ist, nach einem der Ansprüche 1 oder 2, **dadurch gekennzeichnet, dass** ein Schaltknopf, -hebel (40a, 42a) oder ein Menüeintrag eines Menüs zur Betätigung des Schaltmechanismus (40, 42) vorgesehen ist.

4. Mobilfunkendgerät (12, 14), welches für Sprach- als auch zur Videokommunikation ausgebildet ist, nach einem der Ansprüche 1 bis 3, **dadurch gekennzeichnet, dass** Mittel zur Sprachsteuerung (28, 30) vorgesehen sind, mit denen der Schaltmechanismus (40, 42) gesteuert wird.

## Claims

1. A mobile terminal (12, 14), especially for the GSM and UMTS standard, which is designed for both voice and video or image communication and comprises a switching mechanism (40, 42) which switches the video or image communication on or off while the voice communication is running, **characterized in that** the mobile terminal (12, 14) is designed in such a way that upon actuation of the switching mechanism (40, 42) a voice call is held and a video call will be built up in addition to the held voice call.

2. A mobile terminal (12, 14) which is designed for both voice and video communication, according to claim 1, **characterized in that** the switching mechanism (40, 42) connects the voice and video communication in parallel.

3. A mobile terminal (12, 14) which is designed for both voice and video communication, according to one of the claims 1 or 2, **characterized in that** a switch button, switch lever (40a, 42a) or a menu item of a menu is provided for the actuation of the switching mechanism (40, 42).

4. A mobile terminal (12, 14) which is designed for both voice and video communication, according to one of the claims 1 through 3, **characterized in that** means for the voice control (28, 30) are provided, by means of which the switching mechanism (40, 42) is controlled.

## Revendications

1. Terminal mobile (12, 14), notamment pour les standards GSM et UMTS, qui est configuré aussi bien pour la communication par signaux audio que pour la communication par signaux vidéo ou image, et qui comprend un mécanisme de commutation (40, 42) qui active ou désactive la communication par signaux vidéo ou image pendant que la communication par signaux audio se déroule, **caractérisé en ce que** le terminal mobile (12, 14) est configuré de sorte qu'en actionnant le mécanisme de commutation (40, 42) un appel vocal est maintenu et un appel vidéo est établi en plus de l'appel vocal maintenu.

2. Terminal mobile (12, 14) qui est configuré aussi bien pour la communication par signaux audio que pour la communication par signaux vidéo, selon la revendication 1, **caractérisé en ce que** le mécanisme de commutation (40, 42) met la communication par signaux audio et la communication par signaux vidéo en parallèle.

3. Terminal mobile (12, 14) qui est configuré aussi bien pour la communication par signaux audio que pour la communication par signaux vidéo, selon l'une des revendications 1 ou 2, **caractérisé en ce qu'**un bouton de commutation, levier de commutation (40a, 42a) ou un élément de menu d'un menu est prévu pour actionner le mécanisme de commutation (40, 42).

4. Terminal mobile (12, 14) qui est configuré aussi bien pour la communication par signaux audio que pour la communication par signaux vidéo, selon l'une des revendications 1 à 3, **caractérisé en ce que** des moyens de commande vocale (28, 30) sont prévus, par moyen desquels le mécanisme de commutation (40, 42) est commandé.
